# EUROPEAN PATENT APPLICATION

(11) **EP 2 818 258 A2**
(43) Date of publication of application: **31.12.2014**
(21) Application number: 14174855.8
(22) Date of filing: 27.06.2014
(51) Int. Cl.: B09B 3/00

(54) **Machinery for collecting and treating waste**

(30) Priority: 28.06.2013 IT PE20130008; 27.12.2013 IT MI20132212
(71) Applicant: Pavoni, Antonio, 65125 Pescara (IT)
(72) Inventor: Pavoni, Antonio, 65125 Pescara (IT)
(74) Representative: Cernuzzi, Daniele

(57) **Abstract**

A machinery (1) for collecting and treating waste, in particular solid urban waste, comprises an outer containing casing (2), which houses a processing chamber (3), in which the disposed waste is treated to produce two fractions and separate them from each other; and a holding chamber (4), connected to the processing chamber (3) and which receives and separately accumulates the two produced fractions; the processing chamber (3) comprises at least one waste separation part (9) provided with separation means (17), configured so as to separate the waste into an organic wet fraction and into a residual dry fraction directly in the machinery (1) and to accumulate the two fractions in respective compartments (21, 22) of the holding chamber (4).

## Description

The present invention relates to machinery for collecting and treating waste.

It is known that the management of solid urban waste (SUW) is an increasingly important problem for contemporary society.

A possible solution is found in waste sorting and the subsequent reuse of recyclable waste fractions, and in disposal or incineration of the rest.

In order to be effective, Waste sorting carried out with the traditional methods implies a high degree of collaboration by citizens, who must dispose of the waste sorted by type. Waste of various type is normally disposed of in different specific containers which are then emptied and sent to the treatment plants.

However, solutions of this type are not entirely satisfactory, especially because they do not allow a full valorization of the various components of the waste.

In particular, an integrated waste collection system which can manage both the organic fraction and the residual dry fraction in a fully satisfactory manner in a resource perspective is currently not available.

In fact, especially the organic fraction is not appropriately exploited.

It is an object of the present invention to provide machinery for collecting and treating waste which is free from the drawbacks of the prior art set forth herein.

The present invention thus relates to a machinery for collecting and treating waste as defined in essential terms in appended claim 1, while the preferred additional features of which are defined in the dependent claims.

The machinery of the invention allows to pre-treat the raw waste therein, directly at the place of disposal of the waste by the users, in order to refine it and turn it into a high energy power resource in all respects.

Furthermore, the machinery is efficient, compact, reliable and relatively simple and cost-effective to be implemented and managed.

In essence, the machinery of the invention permits to implement the pre-treatments which are currently carried out on industrial scale in waste treatment plants, in particular in anaerobic digestion, composting and incineration plants, directly at the place of disposal so as to cancel out waste disposal costs.

In particular, the machinery supplies: a rich organic liquid (which forms a uniform material, purged from fractions which could decrease its energy potential, and thus is an important energy resource) and a pelletized solid fuel.

Both products are periodically taken from the machinery by means of appropriate collection means and transported to treatment plants, in particular to anaerobic digestion and pyrogasification plants, where the products of the machinery may be effectively used, for example, to produce energy and rich organic composted soil improver.

The machinery of the invention is thus suited to form part of a particularly effective, profitable integrated waste collection and treatment system.

Further features and advantages of the present invention will become apparent from the following description of a non-limitative embodiment, with reference to the figures in the accompanying drawings, in which:

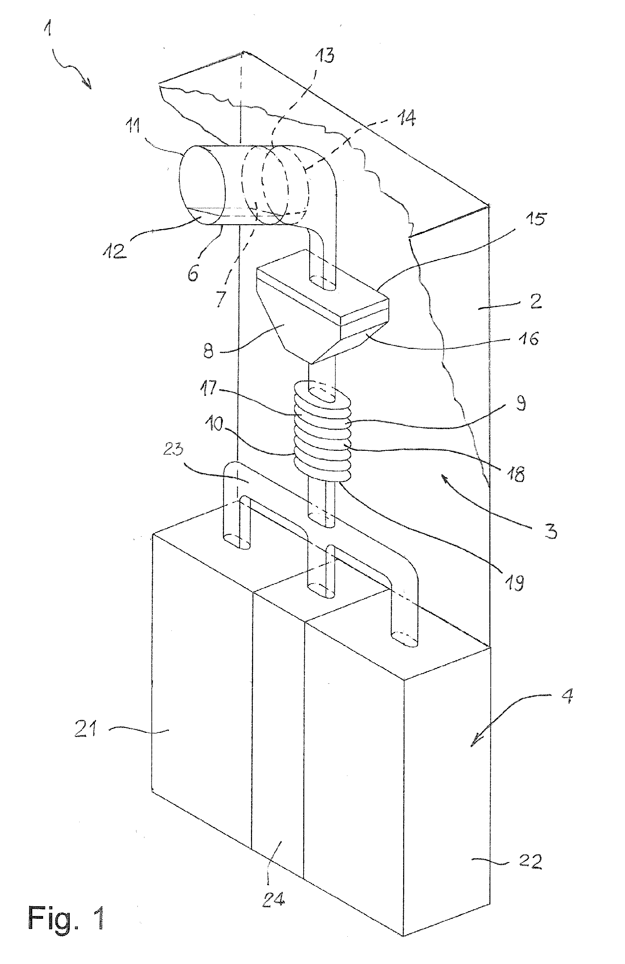

- figure 1 is a diagrammatic view, with parts removed for clarity, of a machinery for collecting and treating waste according to the invention;
- figure 2 diagrammatically shows the various steps of operating the machine in figure 1 in sequence.

With reference to the accompanying figures, a machinery 1 for collecting and treating waste, in particular solid urban waste, comprises an outer containing casing 2 (only partially shown) which houses a processing chamber 3, which interacts with the disposer (the user who disposes of the waste in the machinery 1) and in which the disposed waste is treated to produce and separate from each other two fractions; and a holding chamber 4, connected to the processing chamber 3, which receives and separately accumulates the two produced fractions and interacts with the operators in charge of collection (who transport the produced fractions to specific treatment plants).

The processing chamber 3 internally contains devices which implement a sequential waste refining or pre-treating process, so as to refine the input raw waste and make it suited for a later, effective profitable treatment, in particular in anaerobic digestion plants and in other types of plants used to manage the two fractions produced by the machinery 1.

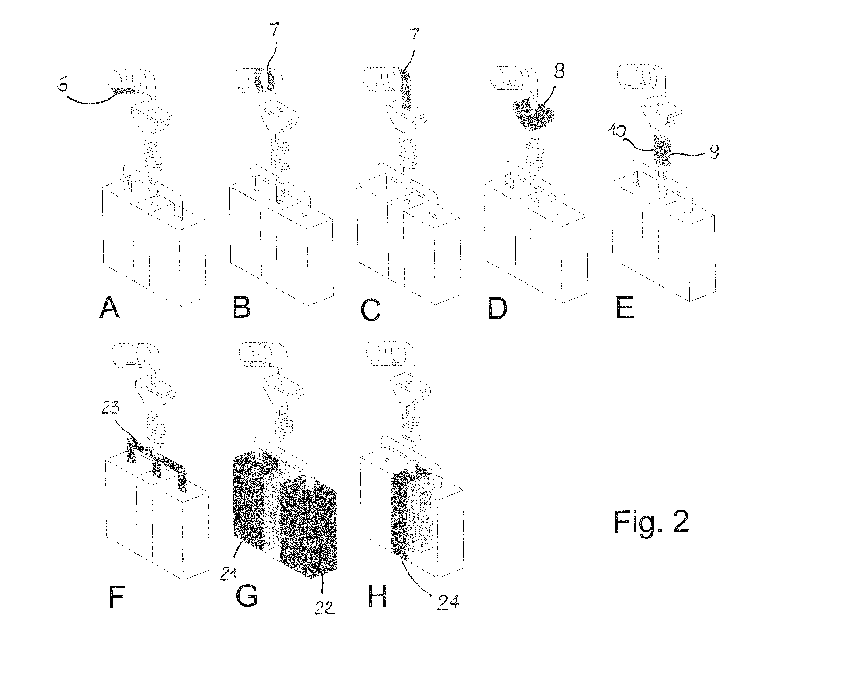

The processing chamber 3 comprises five main parts which implement the sequential refining process: a receiving and weighing part 6 (highlighted in figure 2A), a metal materials screening and separating part 7 (figure 2B-2C), a shredding part 8 (figure 2D), a separation part 9 for separating the waste into an organic wet fraction and a residual dry fraction (figure 2E), a compacting part 10 for compacting the residual dry fraction (figure 2E).

Indeed, it is the main purpose of the machinery 1 to separate the solid urban waste disposed of in the machinery 1 into a biodegradable organic wet fraction (biodegradable organic waste from gardens and parks; food and kitchen waste produced by homes, restaurants, catering services and retailers; similar waste produced by the food processing industry; etc.) and into a residual dry fraction (which cannot be recycled, but which can be used in pyrogasification plants, for example).

The receiving and weighing part 6 comprises an inlet mouth 11, obtained through a front wall of the casing 2, and a scale 12.

The scale 12 is advantageously arranged at the bottom of a magnetic centrifuge 13 of the metal material screening and separating part 7.

For example, the scale 12 and the magnetic centrifuge 13 are contained within a steel cylinder about which a solenoid is wound. The scale 12 is placed within a longitudinally sectioned, truncated cone which forms the magnetic centrifuge 13 (the inner details of the various described components are provided by way of example only and are not shown in the figures for simplicity).

In the receiving and weighing part 6, the waste introduced by the user into the machinery 1 by means of the inlet mouth 11, falls onto the bottom of the centrifuge 13, where the scale 12 is located, and is weighed.

The scale 12 is activated, for example, by a control unit (not shown) to weigh the material which, once introduced through the mouth 11, falls onto the scale 12; after weighing, the control unit deactivates the scale 12 and activates the magnetic centrifuge 13, for example by inducing an electromagnetic field by means of the solenoid and by rotating the centrifuge 13. The magnetic ferrous materials are attracted and retained within the centrifuge 13 (where they remain until the electromagnetic field is interrupted and the centrifuge 13 is deactivated); the ferrous materials are then returned to the inlet mouth 11, in order to be removed by the user or conveyed and collected in a specific compartment (described below).

The conveyor placed inside the centrifuge 13, for example a plastic endless screw, pushes the remaining material, purged from the magnetic ferrous part, towards a shutter 14 arranged at an end of the centrifuge 13 opposite to the inlet mouth 11 and provided with a Foucault current generator device (which holds other possible paramagnetic materials). The shutter 14 is actuated by an actuator (not shown), also controlled by the control unit and which opens the shutter 14 intermittently, thus letting the material pass in controlled amounts into a funnel or channel which leads to the shredding part 8.

The shredding part 8 is used to reduce the size of the material in view of its subsequent separation.

The shredding part 8 comprises, for example, a loading hopper 15 and a shredder 16, capable of reducing the treated material to a size of about 10-20 mm, for example.

The shredder 16 consists, for example, of a hammer mill, rotating about an axis and having a rotation speed of 1000 rpm, for example.

The waste in the obtained size is conveyed by gravity into the separation part 9, which comprises separation means 17 configured so as to separate the waste into two different fractions, namely into an organic wet fraction and a residual dry fraction.

The separation means 17 may be of various type; for example, the separation means 17 include an extrusion press or extruder 18 (only diagrammatically shown in the figures), having an extrusion chamber delimited by a perforated side wall, with star-shaped holes of 8 mm, and an endless screw, placed inside the chamber and adhering to the side wall; the extrusion chamber and the corresponding endless screw are preferably cone-shaped (or truncated cone-shaped); the endless screw pushes the material present inside the extruder 18 against the perforated side wall: a fraction of material crosses the holes, the other part remains in the extruder 18 and is pushed to the compacting part 10 which, for example, is placed underneath the extrusion chamber.

In the separation part 9, the waste is separated by size into organic wet fraction and residual dry fraction of different size: the fraction waste which crosses the holes in the wall of the extrusion chamber forms the organic wet fraction, while the fraction of waste which remains in the extrusion chamber and is pushed into the subsequent compacting part, forms the residual dry fraction.

The compacting part 10 includes, for example, a pelletizer 19 (only diagrammatically shown) capable of compacting the residual dry fraction into granules (pellets) of predetermined size; the size reduction and the compaction are used to increase the energy content per volume unit; indeed, the pelletized residual dry fraction is a high energy material per volume unit, which is useful as fuel.

The waste fraction which, in the separation part 9, crosses the holes of the extrusion chamber, pushed by the force of the endless screw, forms the organic wet fraction.

The two fractions are then conveyed and collected in the holding chamber 4 (where they fall, for example, simply by the effect of gravity or are conveyed by conveyors).

The holding chamber 4 is placed underneath the processing chamber 3 and communicates therewith by means of pipes.

The holding chamber 4 receives the waste purged into two different fractions: the organic wet fraction and the residual dry fraction.

The holding chamber 4 comprises at least two separate compartments 21, 22 (highlighted in figure 2G), intended to receive the two fractions produced in the processing chamber 3, respectively.

For example, the holding chamber 4 is provided with a sorting device 23 (figure 2E), which sorts the two fractions into the respective compartments 21,22.

The holding chamber 4, as shown in the figures, may also include a compartment 24 (highlighted in figure 2H) for possible rejects produced in the refining process (and the sorting device 23 also intervenes to sort the rejects, in addition to the two fractions).

The compartments 21, 22 and 24 are either provided with doors or can be extracted from the casing 2, so as to be periodically emptied. Their content (i.e. the two fractions produced in the machinery 1) are thus transported to the treatment plants which can adequately use them.

The operation of the machinery 1 is conveniently controlled by a control unit, connected to various sensors placed in the machinery 1 (known and not shown for simplicity), in particular: sensors used for the correct operation of the machinery; sensors to ensure safety; sensors for the correct operation of the machinery program which must develop the value of the input materials.

The control unit is connected to a central server and is provided with a user interface interacting, for example, with the personal cards with which users-disposers are provided.

The central server stores the data which allow the profiling of each user in terms of delivered waste and purchased food and which also allow, by means of a specific algorithm, to establish a possible amount to pay to the user in exchange for the waste disposal.

The machinery 1 is activated by means of the personal card. The interaction between the control unit of the machinery 1 and the user's personal card also possibly allows the disposed waste to be traced and connected to the user who disposed of them, thus also permitting to credit amounts to the user corresponding to the disposed waste.

In essence, the machinery 1 is a discrete event system (DES) of the logical type, which uses a system the dynamic behavior of which is characterized by the asynchronous occurrence of events which identify the material valorization process. A DES is characterized by a set of possible events, a state space and a state evolution governed by the events. The actuators will be controlled by a programmable logical controller (PLC) in order to carry out the process.

Finally, it is understood that changes and variations can be made to the machinery described and shown herein, without departing from the scope of the appended claims.

## Claims

1. A machinery (1) for collecting and treating waste, in particular solid urban waste, comprising an outer containing casing (2), which houses a processing chamber (3), in which the disposed waste is treated to produce two fractions and separate them from each other; and a holding chamber (4), connected to the processing chamber (3) and which receives and separately accumulates the two produced fractions; the processing chamber (3) comprising at least one waste separation part (9) provided with separation means (17), configured so as to separate the waste into an organic wet fraction and into a residual dry fraction directly in the machinery (1) and to accumulate the two fractions in respective compartments (21, 22) of the holding chamber (4).

2. A machinery according to claim 1, wherein the processing chamber (3) comprises: a receiving and weighing part (6), a metal materials screening and separating part (7), a shredding part (8), a separation part (9) for separating the waste into an organic wet fraction and a residual dry fraction, a compacting part (10) for compacting the residual dry fraction.

3. A machinery according to claim 2, wherein the receiving and weighing part (6) comprises an inlet mouth (11), formed through a front wall of the casing (2), and a scale (12), placed at the bottom of a rotating magnetic centrifuge (13) of the metal materials screening and separating part (7); the centrifuge (13) having an essentially cylindrical, perforated side wall capable of attracting the magnetic ferrous materials and a conveyor placed inside the centrifuge (13), for example an endless screw conveyor.

4. A machinery according to claim 2 or 3, wherein a shutter (14), provided with a Foucault current generator device and controlled by an actuator which opens the shutter (14) intermittently, is placed between the metal materials screening and separating part (7) and the shredding part (8).

5. A machinery according to one of the claims from 2 to 4, wherein the shredding part (8) comprises a shredder (16) apt to reduce the size of the treated material.

6. A machinery according to one of the claims from 2 to 5, wherein the separation part (9) is configured to separate by size the waste into the organic wet fraction and the residual dry fraction of different size.

7. A machinery according to claim 6, wherein the separation part (9) comprises an extruder (18), having an extrusion chamber delimited by a perforated side wall and an endless screw placed inside the extrusion chamber and adhering to the side wall of the extrusion chamber to push the material present inside the extruder (18) against the perforated side wall and to separate a material fraction, which crosses the holes, from a second material fraction, which remains inside the extruder (18).

8. A machinery according to claim 7, wherein the extruder (18) has an extrusion chamber and a corresponding endless screw which are cone- or truncated cone-shaped.

9. A machinery according to one of the claims from 2 to 8, wherein the compacting part (10) includes a pelletizer (19) capable of compacting the residual dry fraction into granules of predetermined size.

10. A machinery according to one of the preceding claims, wherein the holding chamber (4) is placed underneath the processing chamber (3) and communicates therewith by means of pipes.
